**Europäisches Patentamt**

**European Patent Office**

**Office européen des brevets**

(11) Publication number: **0 147 227**
**B1**

(12) **EUROPEAN PATENT SPECIFICATION**

(45) Date of publication of patent specification: **11.05.88**

(21) Application number: **84309073.9**

(22) Date of filing: **21.12.84**

(51) Int. Cl.⁴: **B 60 K 41/22, F 16 D 27/16**

(54) System for controlling the clutch current of an electromagnetic clutch of a vehicle.

(30) Priority: **27.12.83 JP 251025/83**

(43) Date of publication of application:
**03.07.85 Bulletin 85/27**

(45) Publication of the grant of the patent:
**11.05.88 Bulletin 88/19**

(84) Designated Contracting States:
**CH DE FR GB IT LI NL**

(56) References cited:
**DE-A-1 455 872**
**FR-A-1 245 117**
**GB-A-2 080 910**

(73) Proprietor: **FUJI JUKOGYO KABUSHIKI KAISHA**
**7-2 Nishishinjuku 1-chome Shinjuku-ku**
**Tokyo (JP)**

(72) Inventor: **Sakakiyama, Ryuzo**
**1-21 Takamatsu**
**Toshima-ku Tokyo (JP)**

(74) Representative: **Kirk, Geoffrey Thomas et al**
**BATCHELLOR, KIRK & EYLES 2 Pear Tree Court**
**Farringdon Road**
**London EC1R 0DS (GB)**

Courier Press, Leamington Spa, England.

## Description

The present invention relates to a system for controlling the clutch current of an electromagnetic clutch disposed between a crankshaft of an engine and the transmission of a motor vehicle.

For starting a vehicle, the clutch current flowing in the coil of the electromagnetic clutch is increased with the engine speed. When vehicle speed exceeds a predetermined speed (for example 20 km/h), a lock-up current flows through the coil, so that the clutch is fully engaged.

Change speed gears in the transmission can be manually changed by cutting off the clutch current, and therefore a vehicle provided with such an electromagnetic clutch is not provided with a clutch pedal. For the cutting off of the clutch current, a gear lever switch is attached to the gear lever and a neutral switch, which is closed at a neutral position of the gear lever, is also provided. When the gear lever switch is manually operated and gear lever is operated to change gear, the clutch current is cut off during the operation of the lever.

In FR—A—1245117 for example a control circuit for an electromagnetic clutch is disclosed in which operation of a gear lever switch causes disengagement of the clutch at the start of the gear change operation and clutch re-engagement at conclusion of the gear change operation.

In such a system, if the gear lever switch is not properly operated during the change-speed operation, as usually caused by the incorrect or insufficient manipulation of the switch by the driver, the gear change cannot be performed because the clutch remains engaged.

An object of the present invention is to provide a system which enables gear change to be effected without a gear lever switch, whereby gear changing can be carried out with ease and certainty.

According to the present invention, a system for controlling the clutch current of an electromagnetic clutch for a vehicle having a transmission and a gear lever for changing the gears in the transmission, the system comprising a switch for producing a first signal in response to the operation of the gear lever passing through a neutral position in a gear lever operation, means responsive to the first signal for disengaging the clutch; characterized by timer means responsive to the disappearance of the first signal and for producing a second signal after a delay, the gate means arranged to cut off the clutch current in response to the first signal and to permit flow of the clutch current in response to the second signal, whereby the clutch is disengaged for a predetermined period on the operation of the gear lever.

The switch may be a neutral switch which is operated when the gear lever is in the neutral position, and the gate means may comprise logical gates and a transistor responsive to a signal from one of logical gates for allowing the clutch current to flow.

The invention will be more readily understood by way of example from the following description of a clutch current control system in accordance therewith, reference being made to the accompanying drawings, in which

Figure 1 is a schematic diagram showing the control system; and

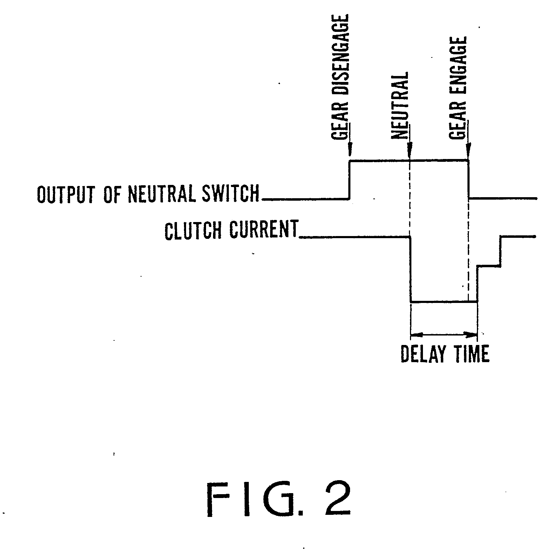

Figure 2 is a graph showing the operation of the system.

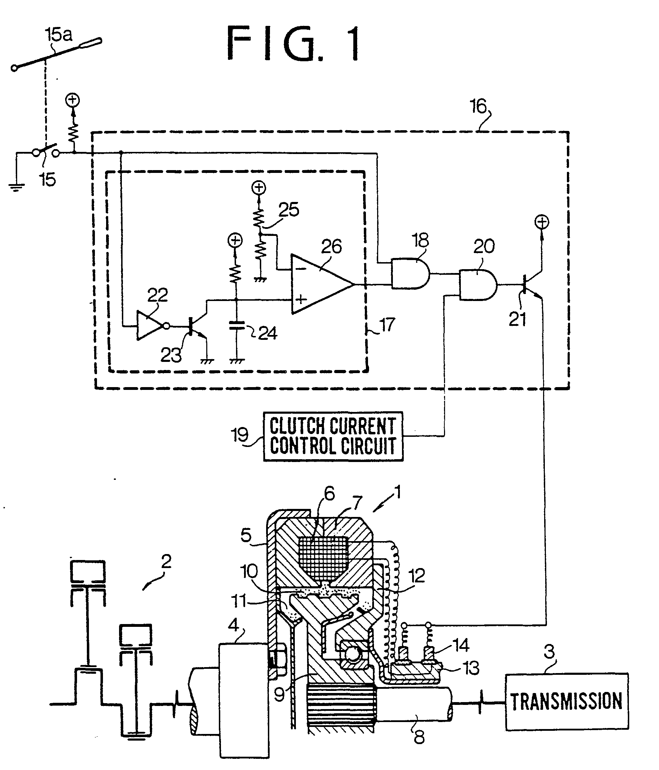

Referring to Figure 1, an electromagnetic powder clutch 1 is provided for transmitting the power of an engine 2 to wheels (not shown) of a vehicle through a manually operated transmission or a belt-drive infinitely variable transmission 3. The electromagnetic powder clutch 1 comprises a drive member 7 connected to a crankshaft 4 of the engine 2 through a drive plate 5, a coil 6 provided in the drive member 7, a driven member 9 having its outer periphery spaced from the inner periphery of the drive member 7 by a gap 10, and a powder chamber 11 defined between the drive member 7 and driven member 9. The powder chamber 11 is filled with powder of magnetic material. The driven member 9 is secured to an input shaft 8 of the belt-drive transmission 3. A holder 12 secured to the drive member 7 carries slip rings 13 which are electrically connected to the coil 6. The coil 6 is supplied through brushes 14 and slip rings 13 with a control current from a control circuit 16.

When the magnetizing coil 6 is excited by the clutch current, drive member 7 is magnetized to produce a magnetic flux passing through the driven member 9. The magnetic powder is aggregated in the gap 10 by the magnetic flux and the driven member 9 is engaged with the drive member 7 by the powder. On the other hand, when the clutch current is cut off, the drive and driven members 7 and 9 are disengaged from one another.

Where an infinitely variable transmission is employed, the transmission ratio is determined in dependence on engine speed and vehicle speed. When the vehicle speed is lower than a predetermined low speed, the transmission ratio is at the highest ratio.

The control system includes a neutral switch 15 which is closed at the neutral position of a shift lever 15a of the transmission 3. Instead of the neutral switch, a gear position switch which is opened when any gear engages with another gear may be utilized. When the neutral switch 15 is closed at the neutral position, a low level signal is applied to a timer 17 and to an AND gate 18 of the control circuit 16. The timer 17 comprises an inverter 22 supplied with the output signal of the neutral switch 15, transistor 23 connected to the output terminal of the inverter 22, capacitor 24 connected between the collector of the transistor 23 and the ground, and comparator 26 for comparing the voltage at the capacitor 24 with a reference voltage supplied by a voltage divider 25. The output of the comparator 26 is applied to the other input terminal of the AND gate 18. The output of AND gate 18 is applied to an AND gate 20 together with an output signal of a clutch current control circuit 19. The output of the AND gate 20 is applied to the base of a transistor 21 connected in series with the clutch coil 6, in order to control the clutch current passing in the transistor 21.

In operation, when one of gears in the transmission 3 is in engagement with another gear, the neutral switch 15 is in open state. Accordingly, the output of the neutral switch is at high level, causing transistor 23 to be non-conductive and the voltage at the capacitor 24 to be high. The output of comparator 26 is at high level, so that the output of the AND gate 18 is at high level. AND gate 20 produces an output signal in accordance with the output of the clutch current control circuit 19, which is arranged to produce a pulse train, the duty ratio of which varies with engine speed. The output signal of the AND gate 20 renders the transistor 21 conductive, so that the clutch current flows through the coil 6 to engage the clutch.

When the gear lever 15a is shifted in order to disengage the interconnected gears and is positioned at the neutral position or passes through the neutral position, the switch 15 is closed, causing the output thereof to go to low level. The low level output causes AND gates 18 and 20 to close, thereby cutting off the clutch current to disengage the clutch. Other gears can then be engaged by further shifting the gear lever 15a.

At the same time, transistor 23 in the timer 17 becomes conductive by virtue of the high level output of the inverter 22, so that the voltage at the capacitor 24 falls to low level, and the outpout of comparator 26 is at a low level. Accordingly, although the output of the neutral switch 15 again becomes high at the engagement of the gears, clutch current does not flow because AND gate 18 remains closed, and the disengaged state of the clutch is maintained. At the opening of switch 15, charging of the capacitor 24 begins, and when a predetermined time elapses, the voltage at the capacitor becomes larger than the reference voltage from the voltage divider 25. The output of the comparator 26 then becomes high, causing the engagement of the clutch. The engagement of the clutch is controlled by the clutch current control circuit 19 to gradually engage the clutch. The delay time by the timer 17 is chosen to be a period necessary to perform the change-speed operation of the gear lever.

By the operation of the control system the electromagnetic clutch is automatically disengaged for an appropriate time by the operation of the switch which is necessarily operated by the operation of the gear lever. Thus, a gear change of the transmission can be easily performed without the need to operate a shift lever switch for the disengagement of the clutch. Further, the construction of the shift lever is simplified, since a gear lever switch is no longer provided on the lever.

## Claims

1. A system for controlling the clutch current of an electromagnetic clutch (1) for a vehicle having a transmission (3) and a gear lever (15a) for changing the gears in the transmission, the system comprising a switch (15) for producing a first signal in response to the operation of the gear lever (15a) passing through a neutral position in a gear lever operation, means (21) responsive to the first signal for disengaging the clutch; characterized by timer means (17) responsive to the disappearance of the first signal and for producing a second signal after a delay, the gate means (18, 20) arranged to cut off the clutch current in response to the first signal and to permit flow of the clutch current in response to the second signal, whereby the clutch (1) is disengaged for a predetermined period on the operation of the gear lever (15a).

2. A system according to claim 1, wherein the switch is a neutral switch (15) which is operated when the gear lever (15a) is in the neutral position.

3. A system according to claim 1 or claim 2, wherein the gate means comprises logical gates (18, 20) and a transistor (21) responsive to a signal from one of the logical gates (20) for allowing the clutch current to flow.

4. A system according to any one of the preceding claims, wherein the timer means comprises a capacitor (24), a transistor (23) responsive to the first signal for controlling the charging and discharging of the capacitor, and a comparator (26) for comparing the voltage at the capacitor (24) with a reference voltage.

## Patentansprüche

1. Steuerungssystem für den Kupplungsstrom einer elektromagnetischen Kupplung (1) eines Fahrzeugs mit einem Getriebe (3) und einem Ganghebel (15a) zum Wechseln des Getriebezuges; mit einem Schalter (15) zum Erzeugen eines ersten Signals bei Bewegung des Ganghebels (15a) in die Neutralstellung und mit einer auf das erste Signal ansprechenden Einrichtung (21) zur Trennung der Kupplung, gekennzeichnet durch eine auf das Verschwinden des ersten Signals ansprechende Zeitschalteinrichtung (17), die nach einer Verzögerung ein zweites Signal erzeugt, und durch eine Gattereinrichtung (18, 20), die so angeordnet ist, daß sie auf das erste Signal ansprechend den Kupplungsstrom abschaltet und auf das zweite Signal ansprechend ein Fließen des Kupplungsstroms erlaubt, wodurch die Kupplung (1) bei Betätigung des Ganghebels (15a) für eine vorbestimmte Zeitspanne getrennt wird.

2. Steuerungssystem nach Anspruch 1, dadurch gekennzeichnet, daß der Schalter ein Neutralstellungs-Schalter (15) ist, welcher betätigt ist, wenn der Ganghebel (15a) in seiner Neutralstellung ist.

3. Steuerungssystem nach Anspruch 1 oder 2, dadurch gekennzeichnet, daß die Gattereinrichtung logische Glieder (18, 20) und einen auf ein Signal von einem (20) der logischen Glieder Ansprechenden Transistor (21) aufweist, der ein Fließen des Kupplungsstroms erlaubt.

4. Steuerungssystem nach einem der vorstehenden Ansprüche, dadurch gekennzeichnet, daß die Zeitschalteinrichtung einen Kondensator (24), einen auf das erste Signal ansprechenden Transistor (23) zum Steuern des Ladens und Entladens des Kondensators und einen Vergleicher (26) zum Vergleichen der Spannung des Kondensators (24) mit einer Referenzspannung aufweist.

**Revendications**

1. Dispositif pour contrôler ou commander le courant d'une embrayage électromagnétique (1) pour un véhicule comportant une transmission (3) et un levier de changement de vitesse (15a) pour changer le rapport des pignons d'engrenage de la transmission, ledit dispositif comportant un commutateur (15) qui produit un premier signal en réponse au passage du levier de changement de vitesse (15a) par une position neutre au cours de l'actionnement de cleui-ci pour changer le rapport, des moyens (21) qui, en réponse au premier signal débrayent l'embrayage, caractérisé en ce qu'un minuteur (17) répond ä la disparition du premier signal et produit un second signal après un certain délai, des portes (18, 20) conçues pour couper le courant d'embrayage en réponse au premier signal et pour lui pemettre de circuler en réponse au second signal, ce qui fait que l'embrayage (1) est débrayé pendant une période de temps prédéterminée quand on actionne le levier de changement de vitesse (15a).

2. Dispositif selon la revendication 1, caractérisé en ce que ledit commutateur est un commutateur neutre (15) qui est actionné quand le levier de vitesse (15a) est sur la position neutre ou de point mort.

3. Dispositif selon la revendication 1 ou 2, caractérisé en ce qu'il comprend des circuits logiques (18, 20) et un transistor (21) qui, en réponse à un signal provenant de l'un des circuits logiques (20) permet au courant d'embrayage de circuler.

4. Dispositif selon l'une quelconque des revendications précédentes, caractérisé en ce que le minuteur comprend un condensateur (24), un transistor (23) qui, en réponse au premier signal, commande la charge et la décharge du condensateur et un comparateur (26) qui compare la tension apparaissant aux bornes du condensateur (24) avec une tension de référence.

# FIG. 1

CLUTCH CURRENT
CONTROL CIRCUIT

TRANSMISSION

OUTPUT OF NEUTRAL SWITCH

CLUTCH CURRENT

GEAR DISENGAGE

NEUTRAL

GEAR ENGAGE

DELAY TIME

# FIG. 2